Europäisches Patentamt

(19) European Patent Office

Office européen des brevets

(11) Publication number : **0 551 162 A2**

(12) **EUROPEAN PATENT APPLICATION**

(21) Application number : **93200049.0**

(22) Date of filing : **08.01.93**

(51) Int. Cl.⁵ : **B06B 3/00, G10K 13/00**

(30) Priority : **09.01.92 JP 2357/92**
**11.09.92 JP 243753/92**

(43) Date of publication of application :
**14.07.93 Bulletin 93/28**

(84) Designated Contracting States :
**DE FR GB IT SE**

(71) Applicant : **Yamane, Hiroyuki**
**238-2, Jyuno-cho 2-chome**
**Ohmiya-shi, Saitama 330 (JP)**

(71) Applicant : **Sekiguchi, Katsuaki**
**37-1-415, Narashinodai 8-chome**
**Funabashi-shi, Chiba 274 (JP)**

(71) Applicant : **Tanaka, Hitoshi**
**4570 Akaho**
**Komagane-shi, Nagano 399-41 (JP)**

(72) Inventor : **Yamane, Hiroyuki**
**238-2, Jyuno-cho 2-chome**
**Ohmiya-shi, Saitama 330 (JP)**

(74) Representative : **Smulders, Theodorus A.H.J.,**
**Ir. et al**
**Vereenigde Octrooibureaux Nieuwe Parklaan**
**97**
**NL-2587 BN 's-Gravenhage (NL)**

(54) **Ultrasonic wave generator and floating or suspended particle collecting apparatus using the same.**

(57) An ultrasonic wave of high sound pressure which implements high dust collection effect is generated, and floating or suspended particles such as dust are effectively removed using the ultrasonic wave. A floating or suspended particle collecting apparatus includes a hollow pipe into which fluid containing floating or suspended particles is introduced, a cylindrical diaphragm which is disposed inside of the pipe, and whose dimension is set in such a manner that a sound field generated inside of the diaphragm when the diaphragm is resonated at a natural frequency thereby keeping in a resonant state, and an ultrasonic driving source for resonating the diaphragm at the natural frequency to radiate ultrasonic waves from the diaphragm. The floating or suspended particles are collected by the strong ultrasonic waves generated in the floating or suspended particle collecting apparatus.

FIG. 1

2: ULTRASONIC DIAPHRAGM 4: HORN

3: ULTRASONIC TRANSDUCER 10: ULTRASONIC WAVE GENERATOR

(a)

(b)

## BACKGROUND OF THE INVENTION

### 1. Field of the Invention

This invention relates to an ultrasonic wave generator capable of radiating an ultrasonic wave having high sound pressure into gas atmospheres or the like, and a particle collecting apparatus for collecting only floating or suspended particles of smoke, oil, dust, harmful gas, etc. from gas or liquids containing these particles using the ultrasonic wave generator.

### 2. Related Background Art

As in a conventionally-used dust collectors there have been known a gravitational dust collector in which dust is precipitated through gravitational action, an inertial dust collector in which dust is separated and collected by means of its inertial force through impingement with various collecting materials or surfaces, a centrifugal dust collector in which dust is separated and collected by centrifuging the dust, a scrubbing dust collector in which dust is collected by water droplet, water screen, water bubble or the like, a filter dust separator in which dust is separated and collected by entrapment of the dust within a filter, an electrostatic precipitator in which dust is charged and then electrostatically adhered to a surface, etc.

However, the conventional dust collectors as described above, except for the filter dust separator, require a large-scaled apparatus. Particularly the electrostatic precipitator using high voltage requires sufficient safety precautions.

On the other hand, the filter dust collector requires not only a filter, but also an air blower for blowing gas into the filter, so that a total cost for the filter dust collector is increased. Furthermore, the collection of dust containing fine particles requires a fine-meshed filter. Such a fine-meshed filter is liable to be clogged by the dust, so that a work of removing the dust from the filter or exchanging the filter must be frequently carried out. In addition, since the fine-meshed filter has high air resistance, the air blower as described above is required to have a large capacity, so that a higher cost is required.

In view of the above disadvantages of the conventional dust collectors there has been proposed an ultrasonic-type dust collector in which ultrasonic wave is radiated to floating or suspended particles to excite the floating or suspended particles and aggregate these particles into large-size particles and then these large-size particles are removed (for example, in Japanese Laid-open Patent Application No. 50-25926, in Japanese Laid-open Patent Application No. 50-35766, and in Japanese Laid-open Patent Application No. 50-155472).

However, since an ultrasonic wave source which is capable of sufficiently assuring sound pressure of ultrasonic wave to be radiated to the floating or suspended particles has not been implemented in the conventional ultrasonic-type dust collector, it is difficult to sufficiently aggregate the floating or suspended particles propagating in the gas as described in the Japanese Laid-open Patent Application No. 50-25926 and the Japanese Laid-open Patent Application No.50-35766. In addition, as described in the above Japanese Laid-open Patent Applications, the ultrasonic-type dust collector has been used in combination with another dust collector as a filter, etc.. Furthermore, this dust collector has been used as only a pretreatment means which is settled at the upstream side of another dust collecting means. According to experimental results of the applicant of this application, it has been found that in order to obtain sufficient collecting effects of aggregating the floating or suspended particles in a gas, the sound pressure of the ultrasonic wave should be above 150[dB] at minimum. However, the conventional ultrasonic wave sources are capable of providing sound pressure of only 140[dB] at maximum. Therefore, the collecting effect of conventional ultrasonic wave sources have been insufficient.

## SUMMARY OF THE INVENTION

An object of this invention is to provide an ultrasonic wave generator capable of generating ultrasonic wave having high sound pressure and thus achieving a high collecting effect, and a floating or suspended particle collecting apparatus for removing floating or suspended particles of dust or the like with high efficiency using the ultrasonic wave generator.

In order to attain the above object, the ultrasonic wave generator of this invention comprises a diaphragm which is designed in a cylindrical form, and whose dimension is set in such a manner that a sound field generated in an inner space thereof is allowed to be in a resonant state when it is resonated at a natural frequency thereof, and an ultrasonic wave driving source for resonating the diaphragm at the natural frequency to allow radiation of ultrasonic waves.

The diaphragm may be resonated by the ultrasonic wave driving source such that a bending or deflection vibration is induced in a peripheral direction thereof. When the diaphragm includes an outer cylindrical diaphragm and an inner cylindrical diaphragm disposed inside of the outer cylindrical diaphragm, the outer cylindrical diaphragm and the inner cylindrical diaphragm are integrally driven by the same ultrasonic wave driving source.

The ultrasonic wave generator of this invention may comprise a diaphragm which is designed in a rectangular form, and whose dimension is set in such a manner that a sound field generated at a surrounding thereof is allowed to be in a resonant state when it is resonated at its natural frequency, and an ultrasonic wave driving source for resonating the diaphragm at the natural frequency to allow radiation of ultrasonic waves.

In this case, the diaphragm may be also resonated by the ultrasonic wave driving source such that a bending or deflection vibration is induced in the longitudinal direction of the diaphragm.

In the invention as described above, the diaphragm is resonated by the ultrasonic wave driving source, and in addition the sound field generated inside or at the surrounding of the diaphragm is kept in the resonant state, so that the sound pressure of the ultrasonic wave to be radiated from the diaphragm is remarkably more improved in comparison with that of the conventional diaphragm in which only the resonance of the diaphragm is considered. For example, when the design of this invention in which a resonance condition for the sound field as described above is also considered is applied to the conventional ultrasonic wave generator which is designed in dimension and shape so as to provide sound pressure of about 140 [dB], ultrasonic wave having sound pressure above 160 [dB] can be radiated.

The floating or suspended particle collecting apparatus of this invention includes a hollow tube into which fluid containing floating or suspended particles is introduced, a diaphragm which is disposed inside of the hollow tube and designed in a cylindrical form, and whose dimension is set such that a sound field generated in the inner space thereof is allowed to be in a resonant state when it is resonated at a natural frequency thereof, and an ultrasonic wave driving source for resonating the diaphragm at the natural frequency to allow radiation of ultrasonic waves.

When the tube is designed in a cylindrical form, the diaphragm is coaxially disposed in the tube or is disposed in such a manner that the axis of the diaphragm is intersected to the axis of the tube at a predetermined angle. When the axis of the diaphragm is obliquely disposed, means for rotationally introducing the fluid along the substantially tangential direction of the tube may be provided. Furthermore, both ends of the tube may be substantially closed, or the axis of the tube may be designed so as to extend vertically.

A separation tank may be disposed at least one of the upstream and downstream sides of the diaphragm, and withdrawal means for withdrawing a specific fluid from the separation tank in accordance with difference in specific gravity may be provided in the separation tank. Furthermore, adsorbent material capable of adsorbing the floating or suspended particles may be supplied from the upstream side of the diaphragm to the downstream side thereof by adsorbent material supplying means.

The floating or suspended particle collecting apparatus of this invention includes a hollow tube into which fluid containing floating or suspended particles is introduced, the diaphragm which is disposed inside of the hollow tube and designed in a cylindrical form, and whose dimension is set such that a sound field generated in the inner space thereof is allowed to be in a resonant state when it is resonated at a natural frequency thereof, and the ultrasonic wave driving source for resonating the diaphragm at the natural frequency to allow radiation of ultrasonic waves.

According to the floating or suspended particle collecting apparatus as described above, the ultrasonic wave having high sound pressure above 160[dB] which has not been conventionally achieved is radiated from the ultrasonic wave generator to excite the floating or suspended particles in fluid with the ultrasonic wave and aggregate these floating or suspended particles for collection of the floating or suspended particles, so that the aggregation and collection of the floating or suspended particles are remarkably and effectively performed. Therefore, unlike the conventional ultrasonic-type dust collector, sufficient dust collecting efficiency can be obtained by the apparatus of this embodiment alone, and it is not required to dispose of collecting means such as filters or the like.

With this construction, a superior advantage of the ultrasonic-type dust collector can be obtained. That is, no large-scaled apparatus is required for the dust collection with the ultrasonic wave, and it is unnecessary to frequently carry out cleaning or repair like the filter dust collectors, so that it is also economically effective. In addition, a high-voltage portion is not exposed like the electrostatic dust precipitator, so that this invention has excellent safety factors.

BRIEF DESCRIPTION OF THE DRAWINGS

Fig. 1 is a side view of an ultrasonic generator of a first embodiment of this invention;
Fig. 2 is a schematic diagram of a vibration mode and a displacement distribution of a diaphragm used in the first embodiment;
Fig. 3 is a table showing an example of dimension of the diaphragm of the first embodiment;
Fig. 4 is a table showing the relationship between sound pressure levels and effective values of particle speed;
Fig. 5 is a side view of an ultrasonic wave sound field generated by the diaphragm of the first embodiment;
Fig. 6 is a diagram of an amplitude distribution and a sound pressure distribution of the diaphragm of the first embodiment;
Fig. 7 is a cross-sectional view of a dust collecting apparatus used in an ultrasonic wave generating apparatus of a second embodiment of this invention;
Fig. 8 is a perspective view of Fig. 7;
Fig. 9 is a schematic diagram of a collection state of the dust collecting apparatus of this embodiment;

Fig. 10 is a side view of a modification of the second embodiment;

Fig. 11 is a side view of a dust collecting apparatus using ultrasonic wave of a third embodiment of this invention;

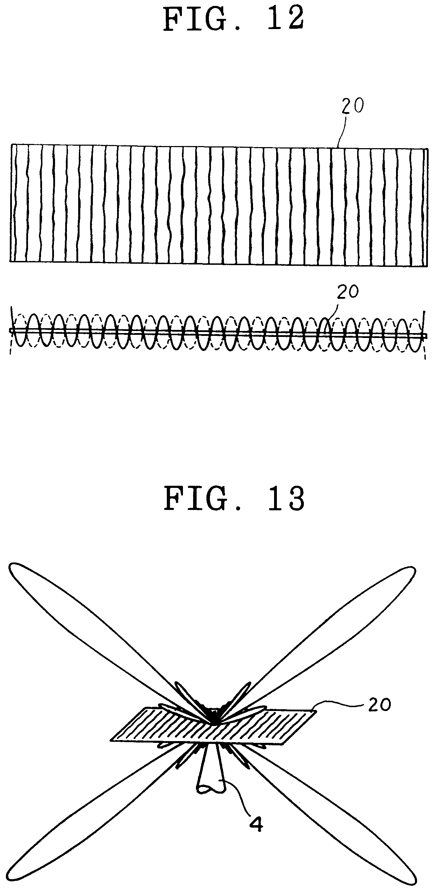

Fig. 12 is a diagram showing a vibration mode and a displacement distribution of a diaphragm used in the third embodiment;

Fig. 13 is a diagram of an angle-dependence of the ultrasonic wave sound field generated by the diaphragm of the third embodiment;

Fig. 14 is a table showing an example of dimension of the diaphragm of the third embodiment;

Fig. 15 is a diagram showing the position of a dust collecting tray used in the third embodiment;

Fig. 16 is a perspective view of a dust collecting apparatus of a fourth embodiment;

Fig. 17 is a perspective view of a floating or suspended particle collecting apparatus of a fifth embodiment; and

Fig. 18 is a perspective view of a modification of the fifth embodiment.

## DETAILED DESCRIPTION OF THE PREFERRED EMBODIMENTS

- First Embodiment -

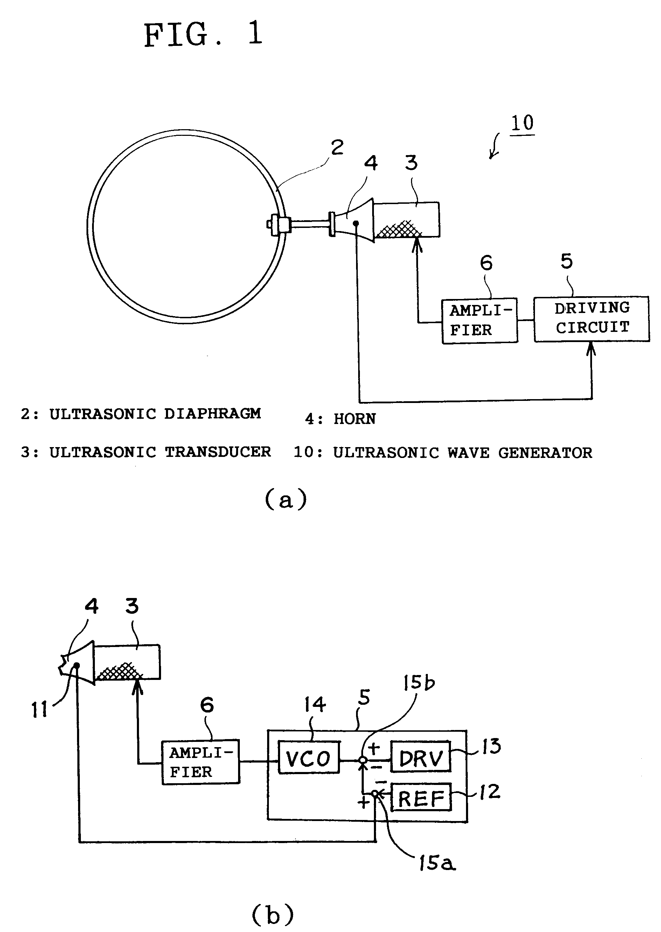

Fig. 1(a) is a side view of a first embodiment of an ultrasonic wave generator according to this invention, and Fig. 1(b) is a circuit diagram showing the details of a driving circuit. In Figs. 1(a) and (b), a reference numeral 10 represents an ultrasonic wave generator of this embodiment, and a reference numeral 2 represents a cylindrical diaphragm. A reference numeral 3 represents an ultrasonic transducer (driver) for generating ultrasonic vibration, and a reference numeral 4 represents a horn for transmitting the ultrasonic vibration from the ultrasonic transducer 3 to the diaphragm 2. The tip of the horn 4 is secured to the side surface of the diaphragm 2 via a bolt.

The ultrasonic transducer 3 and the horn 4 serve to drive the diaphragm at a natural frequency (resonant frequency) of the diaphragm 2 to resonate the diaphragm 2 so that the bending vibration is dominantly generated in the peripheral direction of the diaphragm, thereby radiating ultrasonic waves having the natural frequency (resonant frequency). In addition, the diaphragm 2 is priory designed in dimension, material, shape, etc. such that a sound field which is generated inside of the diaphragm 2 by the radiated ultrasonic wave is allowed to be in a resonant state. Therefore, the shape and material of the horn 4, the shape and material of the diaphragm 2, the securing position of the horn 4 by the bolt, etc. are priory determined in view of the above points, of which the details are to be described later. In this embodiment, each of the diaphragm 2 and the horn 4 is formed of aluminum alloy (duralumin, etc.) or titanium alloy which has high fatigue strength and small loss.

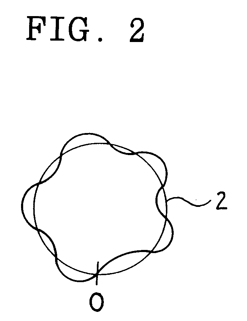

The bending vibration is defined as vibration where an elastic plate is so vibrated as to have a surface which has no stretching and contracting motion, but has a bending motion, and it is also called as "deflection vibration". The bending vibration is induced by propagation of a bending wave in a fixed direction, and in this embodiment the bending wave propagates in the peripheral direction of the diaphragm 2. The bending wave is a wave corresponding to the transmission of transformation occurring when a bar-shaped or plate-shaped elastic member is bent, and is one of various transverse waves with which for a plate-shaped member, displacement occurs in the direction perpendicular to the surface. Fig. 2 is a schematic diagram of bending vibration, and bending waves which are excited in the diaphragm 2.

The following equation gives a condition under that the diaphragm 2 is resonated such that the bending vibration is dominantly induced in the peripheral direction of the diaphragm 2.

$$fm = (Nmh/2\pi r^2)\sqrt{(E/12\rho)} \quad (1)$$

here,

$Nm = m(m^2-1)/\sqrt{(m^2+1)}$

$fm$ : resonant frequency    $r$ : radius of diaphragm

$h$ : thickness of diaphragm    $m$ : order of vibration mode

$E$ : Young's modulus of material of diaphragm

$\rho$ : density of material of diaphragm

Furthermore, according to a study of the inventor of this invention, a condition under that the sound field generated inside of the diaphragm 2 is allowed to be in a resonant state is given by the following equation.

$$fms = \beta msc/2\pi \quad (2)$$

here, fms represents resonant frequency, βms represents radical of recurrence formula using Bessel function, and c represents sound speed. The total length of the diaphragm at which the resonant condition of the sound field is satisfied is given by another equation.

Accordingly, by setting the resonant frequency fm = fms, the dimension (radius r, thickness h and total length) of the diaphragm 2 which enables the sound field generated inside of the diaphragm 2 to be in the resonant state can be determined from the equations (1) and (2) and the other equation defining the total length of the diaphragm.

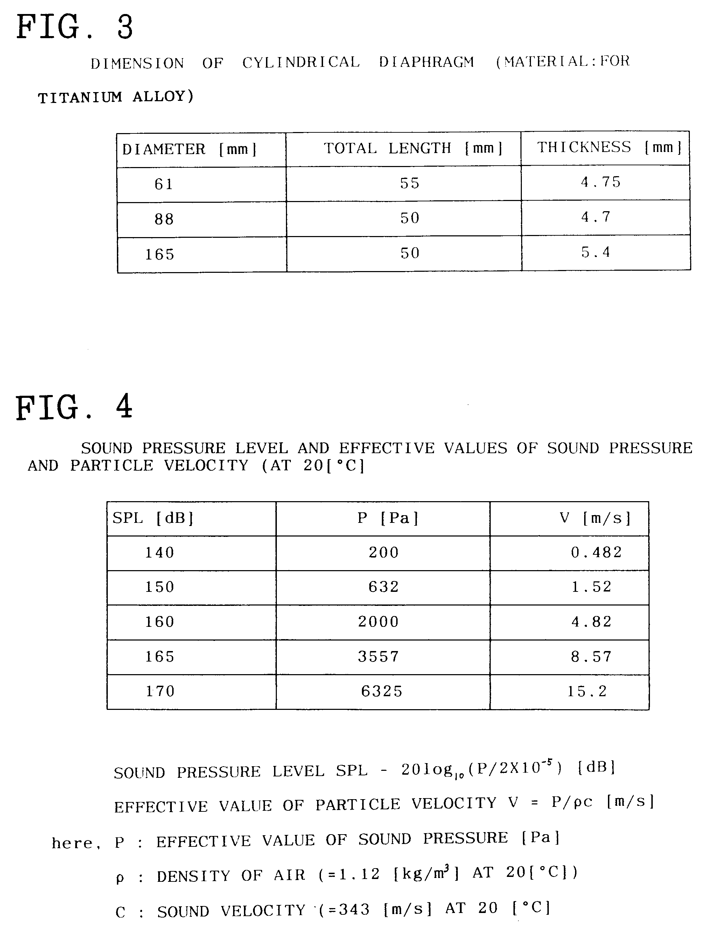

According to a numerical calculation by the inventor, for example, combinations as shown in a table of Fig. 3 can be adopted as the dimension of the diaphragm satisfying the above three equations. The inventor of this invention conducted an ultrasonic wave radiation experiment for a diaphragm 2 having dimension as shown in Fig. 3, and experimentally proved that the diaphragm could generate an ultrasonic wave with sound pressure above 160[dB] which has not been conventionally obtainable. In addition, The ultrasonic wave radiation experiment was also conducted for a diaphragm having dimension satisfying only equation (1), and it was found that this diaphragm generated only sound pressure of about 140[dB] at maximum. For reference, the relationship between the sound pressure levels and the effective values of particle speed is shown in Fig. 4.

Referring to Fig. 1, a reference numeral 5 represents a driving circuit for driving the ultrasonic transducer 3, and the driving circuit 5 drives the ultrasonic transducer 3 such that the ultrasonic transducer 3 is vibrated at a predetermined resonant frequency. In operation, there is a possibility that the horn 4 or the diaphragm 3 can slightly thermally expand with the heat from numerous sources and thus deform to induce frequency fluctuation of the ultrasonic wave. To counteract there fluctuation, therefore, the driving circuit 5 is equipped with a frequency control function for feeding back the oscillation frequency from the horn 4 to converge and govern the oscillation frequency in a predetermined range.

That is, as shown in Fig. 1(b), the horn 4 is equipped with a vibration sensor 11, and the vibration sensor 11 outputs a voltage signal which is proportional to the vibration frequency of the horn 4. A deviation between the signal output from the sensor 11 and a reference voltage output from a reference voltage generator 12 provided in the driving circuit 5 is calculated in a deviator 15a. The deviation voltage is subtracted from a driving voltage from a driving voltage generator 13 in a subtracter 15b. A voltage control oscillator 14 is driven with the subtracted driving voltage to output a signal for driving the ultrasonic transducer 3. As described above, the vibration frequency of the horn 4 is fed back, and the voltage control oscillator 14 is so oscillated that the difference between the feed-back vibration frequency and the frequency corresponding to the reference voltage output from the reference voltage generator 12 is reduced, thereby converging the vibration frequency into a predetermined range.

In this embodiment, the frequency of the ultrasonic wave radiated from the diaphragm 2 is set to 20[kHz]± 500[Hz]. A reference numeral 6 represents an amplifier, that serves to amplify a driving signal from the driving circuit 5. The output of the amplifier 6 is determined in accordance with the size of the diaphragm 2, and in this embodiment it is about 500[W] to 1000[W].

When the ultrasonic transducer 3 is driven through the driving circuit 5 and the amplifier 6, the ultrasonic vibration generated by the transducer 3 is transmitted through the horn 4 to the diaphragm 2, and the diaphragm 2 is so resonated that the bending (or deflection) vibration is dominantly generated in the peripheral direction of the diaphragm 2. The gas adjacent to the diaphragm 2 is accelerated by the resonated diaphragm 2, and ultrasonic waves are radiated. In addition, the sound field generated inside of the diaphragm 2 is kept in the resonant state by the ultrasonic wave radiated from the diaphragm 2.

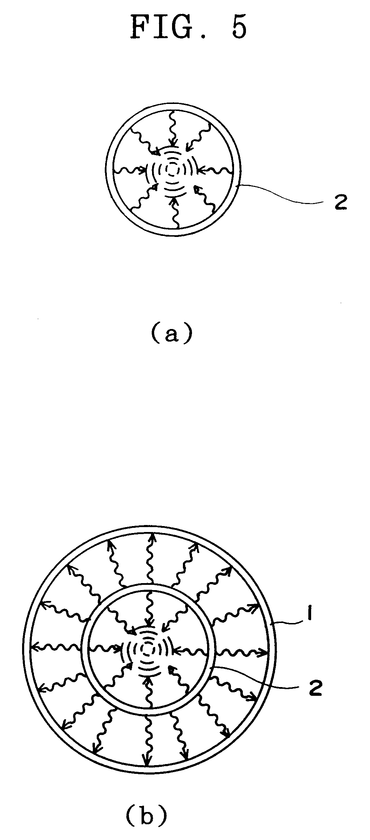

The diaphragm 2 of this embodiment is designed in a cylindrical form, and thus in this case the diaphragm 2 provides a sound field of ultrasonic waves as shown in fig. 5(a) on a plane which is perpendicular to the axis of the diaphragm 2. Therefore, the sound field is generated inside of the diaphragm so as to be concentrated at the center of the diaphragm 2.

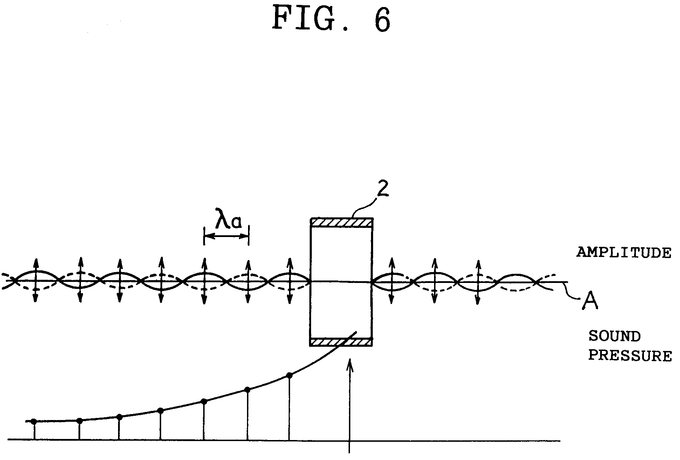

In addition, a sound field as shown in fig. 6 is also generated on a plane along the axis of the diaphragm 2, and an ultrasonic wave amplitude distribution and a sound pressure distribution which expand from the diaphragm 2 in both of the right and left directions thereof as shown in fig. 6 are obtained at the portion along the axis A. Accordingly, when ultrasonic wave propagating medium such as gas exists inside of the diaphragm 2, the medium is accelerated in the right and left directions shown in Fig. 6 along the axis A respectively, so that an ultrasonic wave wind occurs. The ultrasonic wave wind thus generated has a wind speed of about 7[m/sec] at sound pressure of 160[dB]. It has been also found that if air flow along the axis A of the diaphragm 2 is once passed through the diaphragm 2, that upon the triggering by the air flow the ultrasonic wave wind is caused to propagate along the flow direction of the air flow, and the propagation of the ultrasonic wave wind in this direction continues even if the air flow serving as a trigger ceases its flow. Alternatively, if a conical member is provided to locally increase the wind pressure of the ultrasonic wave wind, the ultrasonic wave wind is allowed to propagate in a fixed direction without triggering of the air flow.

According to this embodiment, since the cylindrical diaphragm 2 is resonated by the ultrasonic transducer 3 and the horn 4, and the sound field generated inside of the diaphragm 2 is kept in the resonant state, ultrasonic waves having high sound pressure which have not been achieved by a conventional ultrasonic wave source can be generated. There has been already proposed an ultrasonic wave source in which ultrasonic wave is radiated by resonating a cylindrical diaphragm at a natural frequency which is determined in accordance with material, dimension and shape of the diaphragm (for example, as disclosed in Japanese Patent Publication No. 57-7791). However, the sound pressure of the ultrasonic wave radiated from the ultrasonic wave source as described above is too low to obtain sufficient dust collecting effect. In this embodiment, not only the diaphragm 2, but also the sound field generated in the diaphragm 2 are kept in the resonant state, so that the sound pressure of the ultrasonic wave radiated from the diaphragm 2 is remarkably more improved in comparison with the prior art. According to the experiment result of the inventor of this application, sound pressure above 160[dB] can be achieved.

- Second Embodiment -

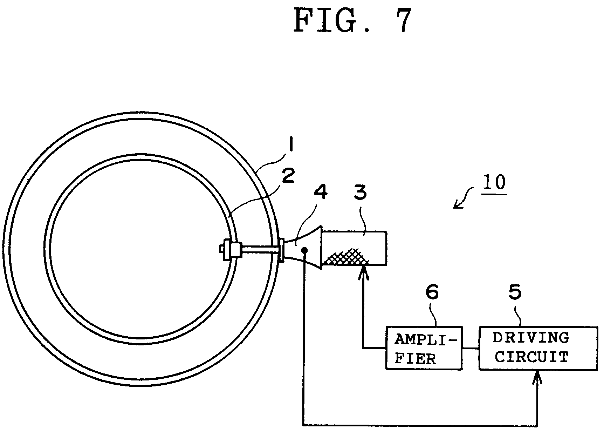

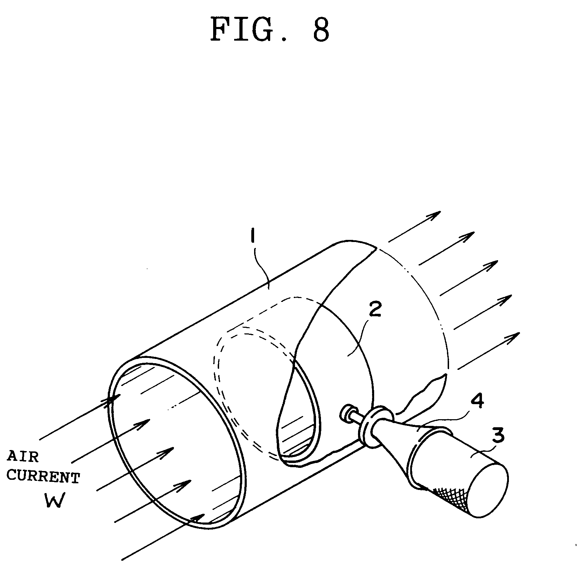

Fig. 7 is a cross-sectional view of an embodiment of a dust collecting apparatus using the ultrasonic wave generator of the first embodiment as described above, and Fig. 8 is a perspective view thereof. In the following description, the same elements as those of each embodiment as described above are represented by the same reference numerals, and the description thereof is eliminated.

In Figs. 7 and 8, a reference numeral 1 represents a cylindrical hollow duct which is also used as an acoustic insulation cover, and air flow W is introduced in a direction as shown in Fig. 8 in the duct 1 by an air blower, for example. Exhaust gas from an internal combustion engine, an incinerator or the like, fumes from a welding machine, outside air or the like is introduced into the duct 1. In other words, a gas containing floating or suspended particles in a wide meaning is introduced into the duct 1. The ultrasonic wave generator 10 is disposed inside of the duct 1 such that the diaphragm 2 is coaxial to the duct 1.

In this embodiment, the horn 4 is provided so as to penetrate through the duct 1, and the penetrating point of the duct 1 is set to such a point that the vibration energy from the horn 4 is balanced with the vibration energy from the diaphragm 2, and thus the whole construction is such that the vibrations of the horn 4 and the diaphragm 2 are cancelled to each other and the vibration from the horn 4 is prevented from being transmitted to the duct 1.

With the construction as described above, when gas containing floating or suspended particles is introduced into the duct in a state where the ultrasonic transducer 3 is driven through the driving circuit 5 and the amplifier 6, the ultrasonic vibration generated in the transducer 3 is transmitted through the horn 4 to the diaphragm 2, and the diaphragm 2 is resonated such that the bending vibration is dominantly generated in the peripheral direction of the diaphragm 2, so that gas adjacent to the diaphragm 2 is accelerated by the diaphragm 2 and ultrasonic waves are radiated. In addition, the sound field generated in the diaphragm 2 is kept in a resonant state by the ultrasonic waves radiated from the diaphragm 2.

Since in this embodiment the diaphragm 2 is designed in a cylindrical form and the duct 1 is coaxially disposed around the diaphragm 2, an ultrasonic wave sound field is generated by the diaphragm 2 on a plane perpendicular to the axis of the diaphragm 2 as shown in Fig. 5(b), and the sound field has sound pressure which is uniform between the diaphragm 2 and the duct 1 and is concentrated at the center of the diaphragm inside of the diaphragm 2.

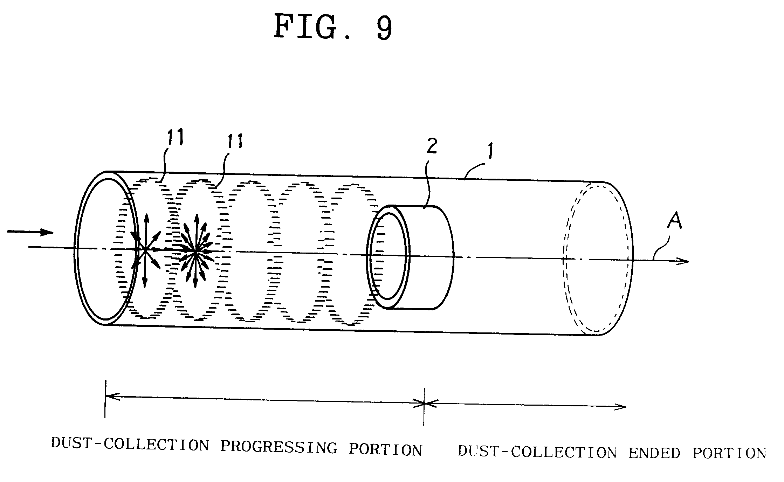

Therefore, the floating or suspended particles flowing through the duct 1 are excited by the ultrasonic wave radiated from the diaphragm 2, and vibrated along the oscillating direction of the ultrasonic wave. In this case, the sound speed of the ultrasonic wave is about 340[m/sec] in the air, but the flow velocity of the gas in the duct 1 is about 3 to 10[m/sec], so that it is guessed that the floating or suspended particles in the neighborhood of the diaphragm 2 are vibrated at a speed near to the sound speed without being affected by the flow velocity of the gas. The floating or suspended particles which are vibrated at the speed near to the sound speed as described above are caused to collide with one another and to be aggregated into large-size particle aggregate to thereby perform dust collection. Particularly since the floating or suspended particles tend to be aggregated in accordance with the amplitude distribution of the ultrasonic wave (see Fig. 6), that is, the particle speed given by the ultrasonic wave, the floating or suspended particle aggregate 11 adhere to the inner wall of the duct 1 at intervals locations corresponding to the wavelength of the ultrasonic wave as shown in Fig. 9. According to an experiment result of the inventor of this application, since the ultrasonic wave radiated from the ultrasonic diaphragm 2 had high sound pressure above 160[dB], as shown in Fig. 9, most of dust was aggregated at the upstream side of the ultrasonic wave generator 10, and at the downstream side of the ultrasonic wave generator 10 was no particle which adhered to the inner wall of the duct 1.

According to this invention, since the ultrasonic wave having sound pressure above 160[dB], for example, which has been conventionally unachievable is radiated from the ultrasonic wave generator 10 to excite the floating or suspended particles in the gas with the ultrasonic wave so that the floating or suspended particles move at a high speed (at the sound velocity of the ultrasonic wave) and can be mutually aggregated, so that the dust collection can be effectively carried out. Therefore, unlike the conventional ultrasonic type dust collecting apparatus, a sufficient dust collecting effect can be obtained by only the apparatus of this invention, and another dust collecting means such as a filter is not required to be disposed at the rear stage of the dust collecting means. With this construction, the advantage inherent to the ultrasonic dust collecting apparatus can be achieved. That is, in the dust collection using ultrasonic wave, no larges-size apparatus is required, and a cleaning or repairing operation is not required to be frequently carried out like the filter dust collector. Therefore, the dust collecting apparatus of this embodiment is economically excellent. In addition, in this embodiment, no high-voltage portion is exposed to the outside like the electrostatic dust collector, and thus the dust collection can be performed with excellent safety.

Furthermore, as shown in Fig. 5, the center portion of the diaphragm 2 at which the sound pressure is most strongly concentrated is a portion where the wind speed in the duct 1 is highest, and in this point the dust collection can be also effectively performed.

The diaphragm 2 itself has remarkably lower air resistance than the filter, and thus the dust collection can be performed without separately providing an air blower or the like if air naturally flows in the duct 1, for example, in the case where ascending currents are generated by a welding fumes. The economical superiority can be also achieved in this point. In addition, if the air flows in a fixed direction in the duct 1, as described above, the air flows in the same direction by the ultrasonic wave wind from the diaphragm 2 in spite of the afterward cease of the air blowing operation. Accordingly, no air blower is required if means for moving the air flow in a fixed direction once is provided.

In the dust collecting apparatus of this embodiment, the dust collection is performed through rapid collision and aggregation between floating or suspended dust particles, and thus the dust collection can be performed for a shorter time as the number of floating or suspended particles is higher. Therefore, an atomizer or the like may be disposed at the upstream side of the dust collecting apparatus to mix particles of water, solvent or the like with the gas, so that the rapid dust collection increases. In this case, the solvent preferably consists of a substance having affinity to the desired floating or suspended dust particles. Furthermore, not only the dust particles, but also gas, smelly material or the like are adsorbed by the particles of water, solvent or the like and then these materials are removed together with the particles of water, solvent or the like to perform deodorization, solvent withdrawal, gas withdrawal, etc., of which the details will be forthcoming in a fifth embodiment description.

- Modification of the Second Embodiment -

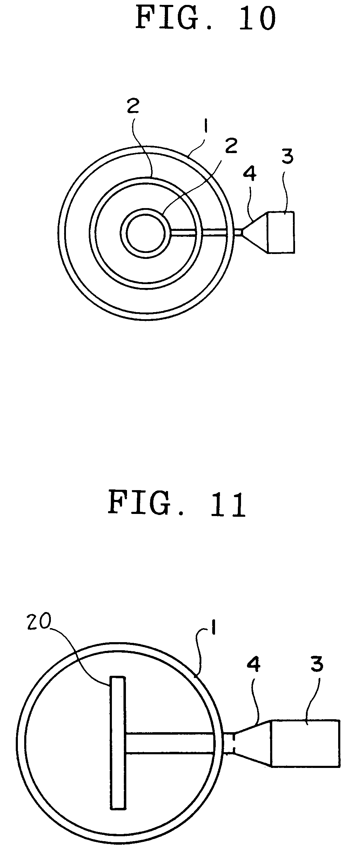

In the second embodiment as described above, one diaphragm 2 is provided for the ultrasonic transducer 3 and the horn 4, however, the number of diaphragms is not limited to one. For example, as shown in Fig. 10, two diaphragms 2 may be coaxially disposed in the duct 1. When the number of the diaphragms 2 is increased as described above, an advantage that the sound pressure between these diaphragms 2 becomes uniform can be obtained.

- Third Embodiment -

Fig. 11 is a side view of an embodiment of the dust collecting apparatus of this invention. A different point between this embodiment and the second embodiment as described above resides in the shape of the diaphragm. That is, in this embodiment, the diaphragm 20 is designed in a rectangular plate form, and it is disposed in the duct 1 such that the center line of the diaphragm 20 in the longitudinal direction is substantially coincident with the axis of the duct 1.

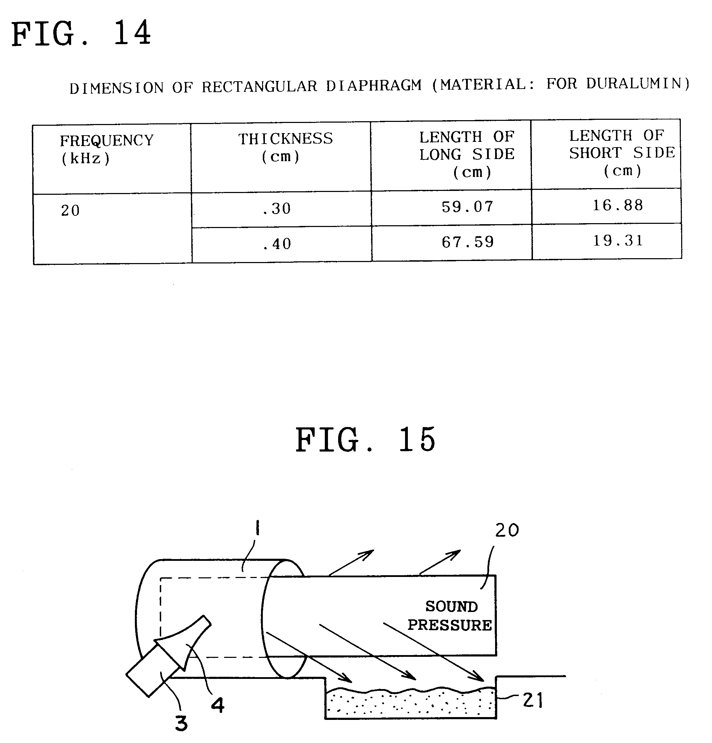

Furthermore, in this embodiment, the ultrasonic transducer 3 and the horn 4 drive the diaphragm 20 at the natural frequency (resonant frequency) of the diaphragm 20 to be resonated such that the bending (or deflection) vibration dominantly occurs in the longitudinal direction of the diaphragm 20, and the ultrasonic wave of the natural frequency (resonant frequency) is radiated. In addition, dimension, material, shape, etc. of the diaphragm 20 are set such that the sound field generated in the duct by the radiated ultrasonic waves is kept in the resonant state. Accordingly, the shape and material of the horn 4, the shape and material of the diaphragm 20, the securing position of the horn 4 by the bolt, etc. are determined in consideration of the above points. Fig. 14 shows an example of the dimensions of the diaphragm 20.

The angle-dependence of the radiated ultrasonic waves from the diaphragm 20 is shown in Fig. 13. In the dust collecting apparatus of this embodiment, as shown in Fig. 15, the floating or suspended dust particles which have been aggregated are collected at four sides, that is, diagonal-right and diagonal-left sides of both front and rear, so that a dust collecting tray 21 may be disposed at each of these sides.

Therefore, in this embodiment, the same effect as the second embodiment can be obtained.

- Fourth Embodiment -

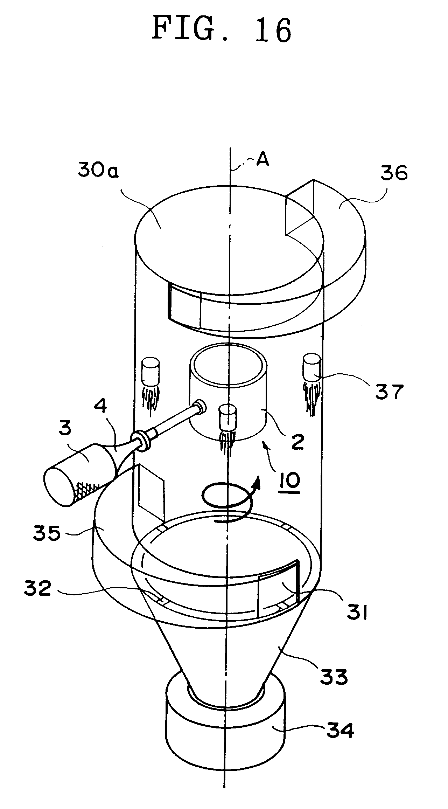

Fig. 16 is a perspective view of another embodiment of the dust collecting apparatus using the ultrasonic wave generator of the first embodiment as described above. In Fig. 16, a reference numeral 30 represents a dust collecting apparatus body which is designed in a vertically cylindrical form. Only an upper end 30a of the dust collecting apparatus body 30 is closed, and a disk-shaped reflection plate 31 is suspended through a support member 32 at an opened lower end 30b of the body 30. A conical guide cylinder 33 which is gradually tapered in the downward direction is attached to a lower portion of the body 30, and a dust collecting tray 34 is provided at the lower end of the guide cylinder 33.

A gas supply duct 35 for supplying gas to be subjected to the dust collection into the body 30 and a gas discharge duct 36 for discharging the gas in the body 30 to the outside are provided at the lower and upper portions of the body 30, respectively. The gas supply duct 35 and the gas discharge duct 36 are both spirally formed in such a manner that gas approaches and departs tangentially to the outer form of the body 30. Therefore, when the gas is introduced from the gas supply duct 35 into the body 30, the gas is violently rotated and ascends in the direction as indicated by a solid line of Fig. 16, and then is discharged from the gas discharge duct 36 while this rotational motion is kept. That is, the combination of the ducts 35 and 36 and the body 30 serves as a cyclone which is one of centrifugal dust collecting apparatuses.

The ultrasonic wave generator 10 of the first embodiment as described above is disposed at a lower side of the gas discharge duct 36 at the upper portion of the body 30. The ultrasonic wave generator 10 is disposed such that the axis of the diaphragm 2 thereof is intersected to the axis A of the body 30 at a predetermined angle. This position is used because (as described above) the ultrasonic wave wind occurs along the axis of the diaphragm 2 when the ultrasonic wave is radiated from the ultrasonic wave generator 10, and this wind is allowed to collide against the inner wall of the body 30 to forcedly generate a rotating air flow in the body 30. Therefore, it is not required to forcedly perform the air blow from the gas supply duct 35 into the body 30 by the air blower or the like although it depends on the capacity of the body 30. The direction of the rotating flow which is generated by the ultrasonic wave generator 10 is not required to be identical to the direction of the rotating air flow which is performed by the gas supply duct 35 and the gas discharge duct 36. Conversely, when both directions of the rotating flows are opposite to each other, the gas is violently stirred in the body 30, and thus the dust collecting effect as described later is more improved.

A reference numeral 37 represents water spray nozzles which are disposed lower than the ultrasonic wave generator 10 along the periphery of the inner wall of the body 30, and water is supplied through a water supply tube (not shown) to each of these water spray nozzles 37.

When the gas containing the floating or suspended particles is introduced through the gas supply duct 35 into the body 30 in a state where the ultrasonic transducer 3 is driven through the driving circuit 5 and the amplifier 6, the ultrasonic vibration generated by the transducer 3 is transmitted through the horn 4 to the diaphragm 2, and the diaphragm 2 is resonated in such a manner that the bending vibration is dominantly generated in the peripheral direction of the diaphragm 2. Therefore, the gas adjacent to the diaphragm 2 is accelerated by the diaphragm 2 and the ultrasonic waves are radiated. In addition, the sound field which is generated inside of the diaphragm 2 by the radiated ultrasonic waves is allowed to be kept in a resonant state. Particularly in this embodiment, the upper end 30a of the body 30 is closed and the reflection plate 31 is disposed at the lower end 30b, and thus both ends of the body 30 are regarded as being substantially closed. Therefore, the sound pressure in this embodiment is higher than a case where both ends of the body 30 are opened.

Accordingly, the floating or suspended particles which are floated or suspended while rotationally moved in the body 30 are excited by the ultrasonic waves radiated from the diaphragm 2 and caused to collide against one another and to be aggregated into large-size particle assemblies. These particle assemblies are rotated in accordance with the rotational motion occurring inside of the body 30, and adhere to the inner wall of the body 30 by centrifugal force. When a certain amount of floating or suspended particles adhere to the inner wall of the body 30, the inner wall is sprayed by the water spray nozzles 37, so that the adhered particles are discharged along the inner wall of the body 30 and the inner wall of the guide cylinder 33 and collected by the dust collecting tray 34. The dust collecting work is carried out in the manner as described above.

Accordingly, the same action and effect as each of the embodiments as described above can be obtained in this embodiment. Particularly in this embodiment, a more effective dust collection can be performed with the assistance of the centrifugal force which is supplied to the floating or suspended particles from the ducts 35 and 36. In addition, since both ends of the body 30 are substantially closed, the sound pressure of the ultrasonic wave in the body 30 can be greatly improved, and thus the dust collecting effect by the ultrasonic wave can also be improved. Furthermore, since the body 30 has a vertically cylindrical structure, the aggregate of the floating or suspended particles adhered to the inner wall of the body 30 can be easily subjected to a removal by such means as water spray.

- Fifth Embodiment -

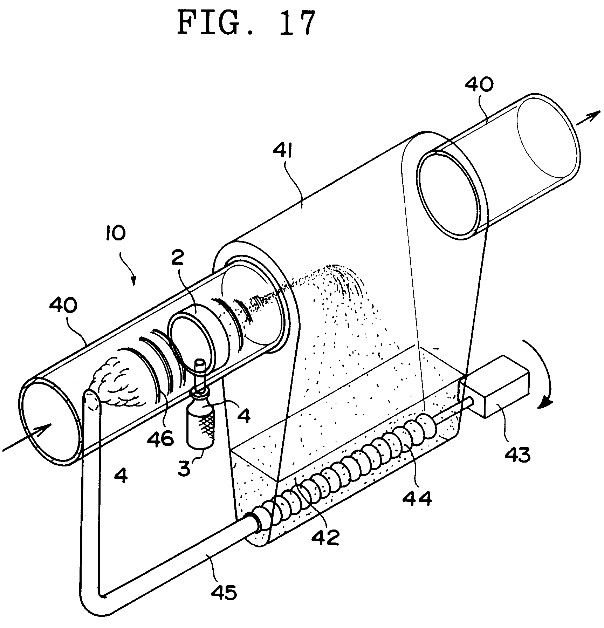

Fig. 17 is a perspective view of an embodiment of an apparatus for collecting floating or suspended particles in liquid according to this invention. In Fig. 17, a reference numeral 40 represents a cylindrical hollow pipe. Liquid containing floating or suspended particles in a wide meaning, such as smelly particles, gas, etc. is introduced along a direction W of Fig. 17 through the pipe 40. The floating or suspended particles in this case are assumed to be chemically or physically adsorbed by adsorbent material such as activated charcoal. The ultrasonic wave generator 10 is disposed in the pipe 40 in such a manner that the diaphragm 2 thereof is coaxially disposed with the pipe 40.

A reference numeral 41 represents a dust collecting box which is arranged into the pipe 40 at the downstream side of the ultrasonic wave generator 10, and its sectional shape is designed so as to be gradually tapered in the downward direction. Sludgy activated charcoal 42 is precipitated at the lower portion of the dust collecting box 41. The activated charcoal 42 is introduced into a return pipe 45 by a screw conveyor 44 which is rotationally driven by a motor 43, and then returned into the pipe 40 at the upstream side of the ultrasonic wave generator 10.

When the gas containing the floating or suspended particles is introduced through the pipe 40 in a state where the ultrasonic transducer 3 is driven through the driving circuit 5 and the amplifier 6, the ultrasonic vibration generated by the transducer 3 is transmitted through the horn 4 to the diaphragm 2, and the diaphragm 2 is resonated such that the bending vibration is dominantly generated in the peripheral direction of the diaphragm 2. Therefore, the liquid adjacent to the diaphragm 2 is accelerated by the diaphragm 2 and ultrasonic waves are radiated. In addition, the sound field which is generated inside of the diaphragm 2 by the radiated ultrasonic waves is allowed to be kept in a resonant state.

Accordingly, by the ultrasonic wave, the floating or suspended particles passing through the pipe 40 are adsorbed by the activated charcoal 42 through collision between the activated charcoal 42 and the smelly particles or the like, and the particles of the activated charcoal 42 are mutually aggregated while adsorbing the floating or suspended particles such as the smelly particles or the like to form aggregate 46 (represented by a reference numeral 11 of Fig. 9). The aggregate 46 of floating or suspended particles flows together with the liquid flowing in the pipe 40 to the downstream side, and then falls downwards due to the difference of its specific gravity from the liquid and is precipitated in the dust collecting box 41 when it reaches the dust collecting box 41 and its flow velocity is reduced. Through this operation, the dust collecting work or the smelly particles removing work is carried out.

As described above, according to this embodiment, the ultrasonic wave having high sound pressure which has been conventionally unachievable is radiated from the ultrasonic wave generator 10, and the floating or suspended particles in the liquid are mutually aggregated by the ultrasonic wave to perform the dust collection and removal of the floating or suspended particles, so that the aggregation of the particles, that is, the dust collection can be remarkably and effectively carried out. Therefore, in this embodiment, the same action and effect as each of the embodiments as described above can be also achieved.

Particularly in this embodiment, the removal of the smelly particles or the like is carried out using activated charcoal. There has been a problem that the activated charcoal has more excellent adsorption capability as its particle diameter is smaller, but it serves as a floating or suspended dust particle when its particle diameter is excessively small. However, according to this embodiment, the fine particles of the activated charcoal are effectively separated from the liquid even if they serve as floating or suspended dust particles, and thus the fine particles of the activated charcoal which have been conventionally unusable can be used in this embodiment. Therefore, this embodiment has the excellent effect that the remarkable improvement of the adsorption capability can be achieved.

The dust collecting box 41 may be provided not only at the downstream side of the diaphragm 2, but also at the upstream side thereof, and alternatively it may be provided at both of the upstream and downstream sides of the diaphragm 2.

- Modification of Fifth Embodiment -

The floating or suspended particle collecting apparatus of the fifth embodiment as described above is used not only for the process of removing the dust or smelly particles, but also for a process of separating liquids having different specific gravity such as an oil separating process. These particles of liquids are mutually aggregated to form aggregates, and the aggregates are separated from one another in accordance with the difference in specific gravity.

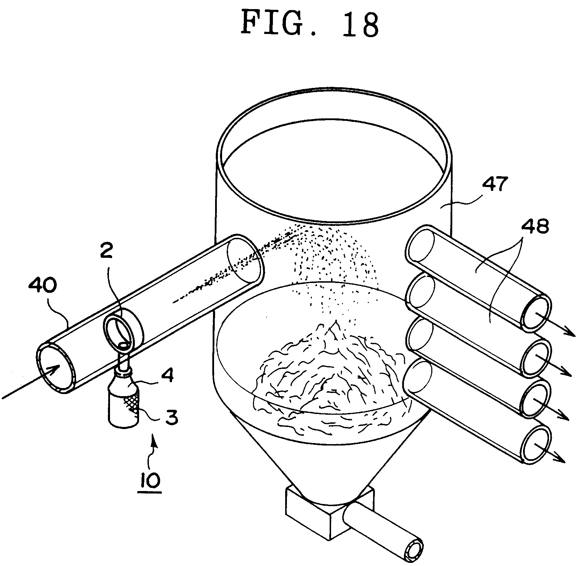

In this case, as shown in Fig. 18, a large-size tank 47 is provided at the downstream side of the ultrasonic wave generator 10, and liquid discharge pipes 48 are secured to the tank at different heights in accordance with the difference in specific gravity of the liquids. Assuming that the diameter of the pipe 40 is set to 10[cm] and the diameter of the tank 47 is set to 2[m], the liquid flowing through the pipe 40 at flow velocity of 10[m/sec] falls downwards and is precipitated at a sufficient low speed of 2.5[cm/seq] in the tank 47, and thus a liquid separating work can be sufficiently performed in the tank 47.

Using no equation providing the sound field resonating condition as described above, the various dimensions of the diaphragm, etc. which satisfy the conditions for the diaphragm resonation and the sound field resonation may be determined using other equations or by a trial-and-error method without relying on theoretical equations.

The details of the ultrasonic wave generator and the floating or suspended particle collecting apparatus of this invention are not limited to the embodiments as described above, and various modifications may be made thereto. For example, the floating or suspended particle collecting apparatus of this invention is independently used in the embodiments as described above. However, it may be used in combination with an electrostatic dust collector disposed at the downstream side of the dust collecting apparatus (for example, a position where a dust collecting tray is disposed) when the dust collection for gas is conducted to thereby perform complete dust collection for aggregated dust (see Japanese Utility Model Application No. 3-67262), which has been proposed by this inventor.

The floating or suspended particle collecting apparatus of this invention may be used for not only a chimney or an air-conditioning duct, but also a small-size member such as an exhaust pipe of an automobile or an air cleaner of an engine. In addition, liquid particles floating or suspended in gas such as mist can be removed.

Furthermore, in the embodiments as described above, the duct, the body of the dust collecting apparatus, the pipe, etc. are designed in a cylindrical form. However, the shape of these elements is not limited to the cylindrical form, and may be designed in a hollow-cylindrical duct structure having sectional-polygonal form, sectional-rectangular form or the like.

## Claims

1. An ultrasonic wave generator comprising:

   a cylindrical diaphragm whose dimension is set in such a manner that a sound field generated inside thereof when said diaphragm is resonated at a natural frequency thereto is kept in a resonant state; and

   an ultrasonic driving source for resonating said diaphragm at the natural frequency to radiate an ultrasonic wave from said diaphragm.

2. The ultrasonic wave generator as claimed in claim 1, wherein said diaphragm includes an outer cylindrical diaphragm and an inner cylindrical diaphragm disposed inside of said outer cylindrical diaphragm, and

   said ultrasonic driving source serves to drive said outer cylindrical diaphragm and said inner cylindrical diaphragm integrally.

3. The ultrasonic wave generator as claimed in claim 1,

   wherein said ultrasonic driving source resonates said diaphragm such that a bending or deflection vibration is generated in a peripheral direction thereof.

4. The ultrasonic wave generator as claimed in claim 3,

   wherein said diaphragm includes an outer cylindrical diaphragm and an inner cylindrical diaphragm disposed inside of said outer cylindrical diaphragm, and

   said ultrasonic driving source serve to drive said outer cylindrical diaphragm and said inner cylindrical diaphragm integrally.

5. An ultrasonic wave generator comprising:

   a rectangular diaphragm whose dimension is set in such a manner that a sound field generated at a surrounding portion of said diaphragm generated when said diaphragm is resonated at a natural frequency thereto is kept in a resonant state; and

   an ultrasonic driving source for resonating said diaphragm at the natural frequency to radiate an ultrasonic wave from said diaphragm.

6. The ultrasonic wave generator as claimed in claim 5,

   wherein said ultrasonic wave generator resonates said diaphragm such that a bending or deflection vibration is generated in a longitudinal direction thereof.

7. A floating or suspended particle collecting apparatus using an ultrasonic wave generator, comprising:

   a hollow pipe into which fluid containing floating or suspended particles is introduced;

   a cylindrical diaphragm which is disposed inside of said pipe, and whose dimension is set in such a manner that a sound field generated inside of said diaphragm when said diaphragm is resonated at a natural frequency thereto is kept in a resonant state; and

   an ultrasonic driving source for resonating said diaphragm at the natural frequency to radiate an ultrasonic wave from said diaphragm.

8. The floating or suspended particle collecting apparatus as claimed in claim 7,

   wherein said pipe is designed in a cylindrical form.

9. The floating or suspended particle collecting apparatus as claimed in claim 7,

   wherein said ultrasonic driving source resonates said diaphragm such that a bending vibration is generated in a peripheral direction thereof.

10. The floating or suspended particle collecting apparatus as claimed in claim 9,

    wherein said pipe is designed in a cylindrical form.

11. The floating or suspended particle collecting apparatus as claimed in claim 10,

    wherein said diaphragm is coaxially disposed inside of said pipe.

12. The floating or suspended particle collecting apparatus as claimed in claim 10,

    wherein said diaphragm is disposed in said pipe in such a manner that the axis thereof is intersected to the axis of said pipe at a predetermined angle.

13. The floating or suspended particle collecting apparatus as claimed in claim 12,

further comprising means for rotationally introducing the fluid into said pipe along a substantially tangent direction of said pipe.

14. The floating or suspended particle collecting apparatus as claimed in claim 13,

wherein said pipe is disposed in such a manner that the axis thereof extends upwardly and downwardly.

15. The floating or suspended particle collecting apparatus as claimed in claim 13,

wherein both ends of said pipe are substantially closed.

16. The floating or suspended particle collecting apparatus as claimed in claim 15,

wherein said pipe is disposed in such a manner that the axis thereof extends upwardly and downwardly.

17. The floating or suspended particle collecting apparatus as claimed in claim 7,

further comprising a separation tank which is disposed at least one of upstream and downstream sides of said diaphragm, and serves to separate the floating or suspended particles from the fluid.

18. The floating or suspended particle collecting apparatus as claimed in claim 17,

wherein said separation tank includes withdrawal means for withdrawing specific fluid from said separation tank in accordance with difference in specific gravity.

19. The floating or suspended particle collecting apparatus as claimed in claim 7,

further comprising adsorbent material supplying means for supplying adsorbent material for the floating or suspended particles from the upstream side of said diaphragm into the fluid.

20. A floating or suspended particle collecting apparatus using an ultrasonic wave generator, comprising:

a hollow pipe into which fluid containing floating or suspended particles is introduced;

a rectangular diaphragm which is disposed inside of said pipe, and whose dimension is set in such a manner that a sound field generated at a surrounding portion of said diaphragm when said diaphragm is resonated at a natural frequency thereto is kept in a resonant state; and

an ultrasonic driving source for resonating said diaphragm at the natural frequency to radiate an ultrasonic wave from said diaphragm.

21. The floating or suspended particle collecting apparatus as claimed in claim 20,

wherein said ultrasonic driving source resonates said diaphragm such that a bending or deflection vibration is generated in a longitudinal direction thereof to thereby radiate an ultrasonic wave from said diaphragm.

# FIG. 1

2: ULTRASONIC DIAPHRAGM          4: HORN

3: ULTRASONIC TRANSDUCER    10: ULTRASONIC WAVE GENERATOR

(a)

(b)

# FIG. 2

2

O

# FIG. 3

DIMENSION OF CYLINDRICAL DIAPHRAGM (MATERIAL:FOR TITANIUM ALLOY)

| DIAMETER [mm] | TOTAL LENGTH [mm] | THICKNESS [mm] |
|---|---|---|
| 61 | 55 | 4.75 |
| 88 | 50 | 4.7 |
| 165 | 50 | 5.4 |

# FIG. 4

SOUND PRESSURE LEVEL AND EFFECTIVE VALUES OF SOUND PRESSURE AND PARTICLE VELOCITY (AT 20[°C]

| SPL [dB] | P [Pa] | V [m/s] |
|---|---|---|
| 140 | 200 | 0.482 |
| 150 | 632 | 1.52 |
| 160 | 2000 | 4.82 |
| 165 | 3557 | 8.57 |
| 170 | 6325 | 15.2 |

SOUND PRESSURE LEVEL SPL - $20 \log_{10}(P/2 \times 10^{-5})$ [dB]

EFFECTIVE VALUE OF PARTICLE VELOCITY $V = P/\rho c$ [m/s]

here, P : EFFECTIVE VALUE OF SOUND PRESSURE [Pa]

$\rho$ : DENSITY OF AIR (=1.12 [kg/m$^3$] AT 20[°C])

C : SOUND VELOCITY (=343 [m/s] AT 20 [°C]

# FIG. 5

(a)

(b)

EP 0 551 162 A2

# FIG. 6

# FIG. 7

EP 0 551 162 A2

# FIG. 8

AIR
CURRENT
W

# FIG. 9

DUST-COLLECTION PROGRESSING PORTION    DUST-COLLECTION ENDED PORTION

EP 0 551 162 A2

# FIG. 10

# FIG. 11

# FIG. 12

20

20

# FIG. 13

20

4

# FIG. 14

DIMENSION OF RECTANGULAR DIAPHRAGM (MATERIAL: FOR DURALUMIN)

| FREQUENCY (kHz) | THICKNESS (cm) | LENGTH OF LONG SIDE (cm) | LENGTH OF SHORT SIDE (cm) |
|---|---|---|---|
| 20 | .30 | 59.07 | 16.88 |
| | .40 | 67.59 | 19.31 |

# FIG. 15

# FIG. 16

# FIG. 17

EP 0 551 162 A2

# FIG. 18

EP 0 551 162 A2